# EUROPÄISCHE PATENTSCHRIFT

(11) **EP 0 568 988 B1**
(45) Veröffentlichungstag und Bekanntmachung des Hinweises auf die Patenterteilung: **02.04.1997**
(21) Anmeldenummer: 93107264.9
(22) Anmeldetag: 05.05.1993
(51) Int. Cl.: B32B 27/06

(54) **Oberflächenresistente Bauteile**
Surface resistant construction elements
Eléments de construction avec une surface très résistante

(30) Priorität: 06.05.1992 DE 9206106 U
(43) Veröffentlichungstag der Anmeldung: 10.11.1993
(73) Patentinhaber: EMS-INVENTA AG, CH-8001 Zürich (CH)
(72) Erfinder: Pfleger, Wolfgang, Dipl.-Ing., CH-7015 Tamins (CH)
(74) Vertreter: Müller-Boré & PartnerPatentanwälte

(56) Entgegenhaltungen:
- EP-A- 0 266 107
- EP-A- 0 320 632
- EP-A- 0 393 409
- DE-A- 2 820 180
- DE-A- 3 634 885
- FR-A- 2 158 422
- GB-A- 2 071 007

## Beschreibung

Die Erfindung betrifft ein oberflächenresistentes Bauteil aus einem Funktions- bzw. Trägerformteil und einer thermoplastischen Schutzschicht als Oberfläche gemäß Anspruch 1.

Oberflächenbeanspruchte Bauteile sind beispielsweise Rückspiegelgehäuse, Türgriffe, Profile, Rohre, Abdeckleisten, Türbeschläge und dergleichen.

Die dafür verwendeten Thermoplaste müssen in der Regel für Aussenanwendungen gegen die Einflüsse von Licht, Luft, Sauerstoff und Witterungseinflüsse aufwendig stabilisiert werden. Stabilisatoren sollen Thermische Schädigungen während der Verarbeitung und dem Gebrauch, Oxidation und Abbau durch Witterungseinflüsse, insbesondere UV-Einstrahlung verhüten. Für fast alle Kunststoffanwendungen braucht man chemisch vielfältig variierbare Stabilisatorsysteme, die in ihrer Zusammensetzung sowohl auf das verwendete Polymer als auch auf die jeweiligen Gebrauchsanforderungen abgesimmt sein müssen. Glasfaser-, glaskugel-und mineral-gefüllte Thermoplaste werden von vorerwähnten Einflüssen vor allem in ihrer optischen Qualität stark beeinträchtigt. Damit erhält das gesamte, unter Umständen dickwandige Bauteil die teuren stabilisierenden Additive, obwohl die zerstörende Wirkung von UV-Strahlung, Sauerstoff und Wetter nur in eine Tiefe von <300µm reicht. Doch genügt dies um qualitative und besonders asthetische Schädigungen zu bewirken.

Zur Beschichtung von Formteilen sind verschiedene Verfahren bekannt.
- Im IMD- (In Mould Decoration) Verfahren der Firma Kurz, Battenfeld), d.h. zum Dekorations-Aufbringen im Werkzeug wird ein Folienverbund durch die Spritzgiessform gezogen. Eine Dekorfolie löst sich von der Trägerfolie und erlaubt so, Dekor-Sujets oder Beschriftungen auf ebene Flächen oder in der Ebene abwickelbare Konturen aufzubringen.
- Im SKINLINE-VERFAHREN gemäss EP-A-199 708, JP-A-62-116114-A und US A-4.849.145 werden konfektionierte Folienverbunde zur Herstellung von Uhrenbändern in ein Formnest eingelegt und hinterspritzt.
- Nach US-A-3.839.129 wird ein Folienverbund mit einer metallisierten Schicht in das Werkzeug eingebracht, hinterspritzt und gestanzt, so dass Formteile ohne aufwendige galvanische Metallisierverfahren mit einer metallisch reflektierenden Schicht versehen werden.

Aufgabe der Erfindung ist es daher, Form- bzw. Bauteile bereitzustellen, deren stark beanspruchte Oberfläche gegen Umwelt-Einflüsse geschützt ist, ohne dass das Form- bzw. Bauteil in seiner gesamten Masse mit den dafür notwendigen stabilisierenden Additiven versehen wird.

Diese Aufgabe wird durch das Bauteil gemäss Anspruch 1 gelöst. Sie wird insbesondere durch ein Bauteil gelöst, dessen Resistenz gegen Umwelteinflüsse durch eine mindestens teilweise die Oberfläche bildende Schutzschicht bewirkt wird.

In den Unteransprüchen sind vorteilhafte Ausführungsformen der Erfindung enthalten.

Das erfindungsgemässe Bauteil zeigt folgende vorteilhaften Eigenschaften:
- Ausgezeichnete Oberfläche wie bei Formteilen aus unverstärkten Materialien,
- Ausbildung der Schutzschicht auf beliebig geformten, vor allem auf nicht ebenen Oberflächen,
- hoher Glanz der Oberflächenstrukturen,
- ausgezeichnete Abbildung von Erodierstrukturen ohne störendes "Auskreiden" von Inhaltsstoffen,
- keine Unansehnlichkeit der Oberfläche nach Bewitterung (Grauschleier), die insbesondere bei glasfaserverstärkten und mineralgefüllten Produkten schon nach relativ kurzer Zeit auftritt,
- verbesserte Lebensdauer,
- hohe Chemikalienbeständigkeit,
- wesentlich reduzierter Verbrauch an Stabilisatorsystemen,
- Erhöhung des Nutzwertes des Bauteiles bei wenig gesteigerten Materialkosten,
- keine Notwendigkeit für den Einsatz von höherwertigen teureren Thermoplasten als Trägermaterial,
- sondern Möglichkeiten, qualitativ einfacheres Trägermaterial zu verwenden.
- Sogar der Einsatz von Recyclat als Trägermaterial ist möglich.

Die Schutzschicht des erfindungsgemässen Form-oder Bauteils wird durch einen Film aus einem resistenten thermoplastischen Polymer gebildet, dessen Oberflächenresistenz durch das Polymer selbst und die stabilisierenden Additive gegeben ist. Diese Additive können handelsübliche Hitze-, Licht-, UV-, Hydrolyse-und Chemikalien-Stabilisatoren bzw. - Stabilisatorsysteme sein. Der die Schutzschicht bildende Film, der, ganzflächig mit dem Formteil verbunden, dessen Oberfläche bildet, ist aus hochwertigem Polymer, ausgewählt aus der Gruppe der Polyamide und Polyester. Das Polymer kann verwendungsbedingte Additive wie Pigmente, Füllstoffe und Schlagzähmodifikatoren enthalten. Besonders bevorzugt ist ein Polyamid von Typ PA4.6, PA6, PA6.6, PA11, PA12, PA10.12, PA12.12 oder ein Copolyamid aus aliphatischen, cycloaliphatischen oder aromatischen Diaminen mit maximal 20C-Atomen und Dicarbonsäuren, wobei Terephthal- und Iso-phthalsäure bevorzugt sind. Ganz besonders vorteilhafte Polyamide sind Polyamid 11 oder Polyamid 12, welche eine ausgezeichnete inhärente Stabilität gegen UV-Licht und Witterungseinflüsse aufweisen.

Als Schutzschicht auf unverstärktem oder verstärktem unstabilisierten PA6 oder PA6.6 gewährleisten die genannten Polyamide eine ausgezeichnete Schutzwirkung für das Trägerteil und sichern somit die mechanischen und örtlichen Eigenschaften des Bauteils über lange Zeit. Ein erfindungsgemässes Bauteil behält seine hohe Steifigkeit auch bei hohen Temperaturen, gleichzeitig präsentiert sich das Erscheinungsbild eines unverstärkten Materials.

Die Schutzschicht kann in speziellen Ausführungsformen mehrschichtig sein und spezielle, die Haftung zum Trägerformteil verbessernde Komponenten wie z.B. gepfropfte Polyolefine enthalten.

Den Körper des Formteils bildet ein bevorzugt spritzgussfähiger Thermoplast aus der Gruppe der Polyamide, Polyester, Polyolefine, Polycarbonate, Acrylnitril-Butadien-Styrol-Polymerisaten (ABS) oder PVC, welcher sogar, zumindest teilweise, aus deren Recyclingprodukten oder aus deren untereinander verträglichen Blends bestehen kann. Dabei sind alle handelsüblichen Polyamidtypen, besonders PA6 und PA6.6 bevorzugt, die ihrerseits mit handelsüblichen, verwendungsbedingten Additiven wie Schlagzähmodifikatoren, Weichmachern, mit Füllstoffen und/oder Pigmenten modifiziert sein können.

Falls Schutzschicht und Trägerformteil ganz oder teilweise unverträglich sind, kann ihre Verträglichkeit mit haftungsvermittelnden Modifikatoren wie beispielsweise Polyolefinen mit reaktiven Gruppen verbessert werden.

Als Anwendungen für das erfindungsgemässe Form- oder Bauteil seien beispielhaft genannt: Rückspiegelgehäuse, Türgriffe, Profile, Rohre, Abdeckleisten, Türbeschläge und andere Formteile aller Art, die gegen UV-Strahlen, oxidative und chemische Angriffe geschützt werden müssen.

Zur Herstellung des erfindungsgemässen Bauteils wird der die Schutzschicht bildende Film in die Spritzgiessform eingelegt, gegebenenfalls dieser Form durch Verformung, z.B. durch Vakuumverformung oder Tiefziehen, angepasst und mit Schmelze hinterspritzt.

Der Film kann dabei entweder von Rollen abgewikkelt und entlang der Trennebene durch die Spritzgiessform gezogen werden oder vor dem Einlegen konfektioniert und von Handlingssystemen eingelegt werden. Vor dem Spritzgiessprozess wird ein Tiefziehprozess, bevorzugt ein Vakuum-Formprozess, vorgeschaltet werden, wenn Bauteile mit grösserer Tiefe und beliebiger, nicht ebener Oberflächenform hergestellt werden sollen.

Die Erfindung wird anhand der Beispiele und der Figur erläutert.

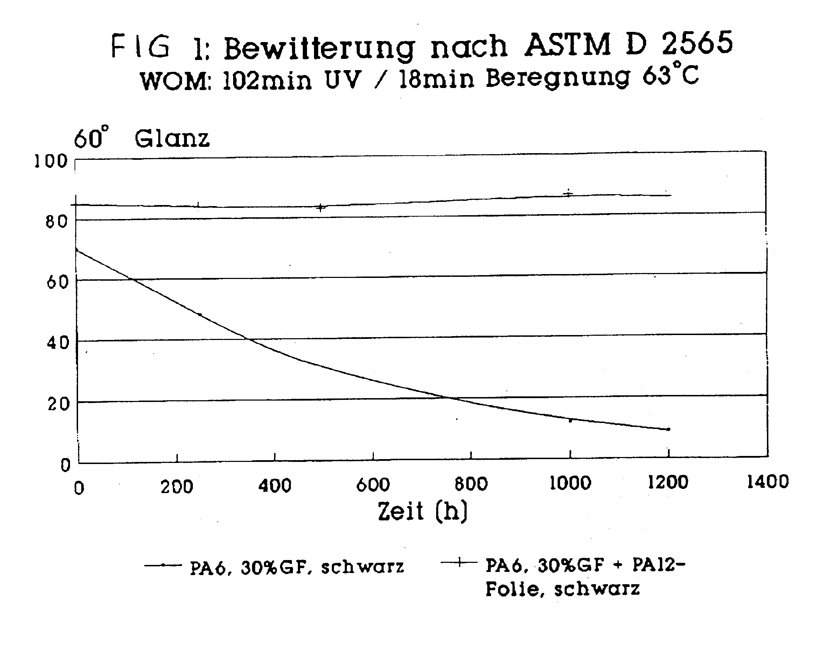

Fig. 1: Glanzabfall bei Bewitterung einer glasfaserverstärkten PA6-Platte (-) im Vergleich zu einer durch eine PA12-Foiie geschützten Platte nach ASTM D 2565; Glasfaseranteil (GF) in beiden Platten 30 Gew.- %.

### Beispiel 1

Eine gewölbte Platte aus glasfaserverstärktem Polyamid 6 wird zusammen mit einer durch eine Polyamid 12-Folie geschützten gleichartigen Platte im Weatherometer bewittert.

Fig. 1 zeigt den Glanzabfall (in %) der beiden Platten durch die Bewitterung nach ASTM D 2565 im Weatherometer (WOM) in den Zyklen 102 min UVBestrahlung/18 min Beregnung bei 63°C. Die durch die PA 12-Folie geschützte Platte zeigt auch nach 1200 Stunden keinerlei Verschlechterung der Oberfläche, während die mit 30 Gew.-% verstärkte Glasfaser ungeschützte Platte schon nach 250 Std. eine unansehnliche Oberfläche aufweist. (60° Glanz auf der VAchse bedeutet, dass die reflektierte Lichtintensität eines unter einem Winkel von 60° auf die zu prüfende Obertläche aufgestrahlten Lichtstrahls gemessen wird).

### Beispiel 2

Die Schutzschicht bildet ein hochstabilisiertes und mit hohem Pigmentanteil versehenes PA6 oder PA6.6 mit brillanter Färbung. Das Formteil ist aus unstabilisiertem, gering oder nicht-eingefärbtem verstärktem oder gefülltem PA6 oder PA6.6 hergestellt. Neben einem ausgezeichneten Schutz des Formteiles, wird bei geringem Verbrauch an Pigmenten und Stabilisatoren eine dauerhaft brillante Oberfläche erzielt.

Die Schutzschicht aus stabilisiertem, eingefärbten PA12 bzw. PA11 erlaubt für Trägerformteile in erfindungsgemässen Bauteilen thermoplastisches Regenerat oder Recylatmaterial einzusetzen, das aufgrund seiner geringen optischen Qualität nicht mehr für hochwertige Bauteile genügt.

## Patentansprüche

1. Oberflächenresistentes Bauteil aus thermoplastischem Kunststoff, bestehend aus Funktions- oder Träger-Formteil und einer die Formteiloberfläche mindestens teilweise bildenden thermoplastischen Schutzschicht, dadurch gekennzeichnet, daß die Schutzschicht durch einen Film aus einem resistenten thermoplastischen Polymeren ausgewählt aus der Gruppe der Polyamide und Polyester gebildet ist, wobei die Formteiloberfläche uneben und der Film nach Einlegen in eine Spritzgießform durch Hinterspritzen mit Schmelze des Formteil-Grundmaterials ganzflächig mit dem Formteil verbunden oder verschmolzen ist.

2. Oberflächenresistentes Bauteil nach Anspruch 1, dadurch gekennzeichnet, dass das Polymere verwendungsbedingte Additive wie Pigmente, Füllstoffe, Schlagzähmodifikatoren enthält.

3. Oberflächenresistentes Bauteil nach den Ansprüchen 1 oder 2, dadurch gekennzeichnet, dass das Polymere gegen Hitze und/oder sichtbares Licht und/oder UV-Strahlung und/oder Hydrolyse und/oder Chemikalien wirksame Stabilisatoren enthält.

4. Oberflächenresistentes Bauteil nach den Ansprüchen 1 bis 3, dadurch gekennzeichnet, dass das Polymere ausgewählt ist aus der Gruppe PA4.6, PA6, PA6.6, PAll, PA12, PA12.12, Copolyamide aus aliphatischen, cycloaliphatischen und aromatischen Diaminen und Dicarbonsäuren mit maximal 20 C-Atomen, wobei Terephthalsäure und Isophthalsäure bevorzugt sind.

5. Oberflächenresistentes Bauteil nach einem der vorhergehenden Ansprüche, dadurch gekennzeichnet, dass die Schutzschicht zwischen 50 und 1000 µm, bevorzugt zwischen 100 bis 500 µm dick ist.

6. Oberflächenresistentes Bauteil nach einem der vorhergehenden Ansprüche, dadurch gekennzeichnet, dass die Schutzschicht und/oder das Trägerformteil verträglichmachende Modifikatoren, insbesondere die gegenseitige Haftung verbessernde Komponenten enthalten.

7. Oberflächenresistentes Bauteil nach Anspruch 6, dadurch gekennzeichnet, dass das Funktions- oder Trägerformteil ein Thermoplast, ausgewählt aus der Gruppe Polyamide, Polyester, Polyolefine, Polycarbonate, Acrylnitril-Butadien-Styrol-Polymerisate, Vinylchlorid-Polymerisate, deren Recyclingsprodukte oder deren miteinander verträglichen Blends ist.

8. Oberflächenresistentes Bauteil nach Anspruch 6 oder 7, dadurch gekennzeichnet, dass das Funktions- oder Trägerformteil ein Thermoplast, ausgewählt aus der Gruppe PA6, PA6.6 ist.

9. Oberflächenresistentes Bauteil nach einem der vorhergehenden Ansprüche, dadurch gekennzeichnet, dass das Trägerformteil verwendungsbedingte Additive wie Schlagzähmodifikatoren, Weichmacher, Füllstoffe, Pigmente enthält.

## Claims

1. Surface-resistant component of thermoplastic material, comprising a functional or support moulding and a thermoplastic protective layer at least partly forming the moulding surface, characterized in that the protective layer is formed by a film of a resistant, thermoplastic polymer chosen from the group of polyamides and polyesters, the moulding surface being non-planar and the film is joined or merged in whole-surface manner with the moulding after insertion in the injection mould by injecting behind with the moulding base material melt.

2. Surface-resistant component according to claim 1, characterized in that the polymer contains use-dependent additives such as pigments, fillers and impact modifiers.

3. Surface-resistant component according to claim 1 or 2, characterized in that the polymer contains stabilizers active against heat and/or visible light and/or UV-radiation and/or hydrolysis and/or chemicals.

4. Surface-resistant component according to claims 1 to 3, characterized in that the polymer is chosen from among the group PA4.6, PA6, PA6.6, PA11, PA12, PA12.12, copolyamides of aliphatic, cycloaliphatic and aromatic diamenes and dicarboxylic acids with mad 20 C-atoms, terephthalic and isophthalic acid being preferred.

5. Surface-resistant according to one of the preceding claims, characterized in that the protective layer is between 50 and 1000, preferably between 100 and 500 µm thick.

6. Surface-resistant component according to one of the preceding claims, characterized in that the protective layer and/or the support moulding contain compatibilizing modifiers, particularly components improving mutual adhesion.

7. Surface-resistant component according to claim 6, characterized in that the functional or support moulding is a thermoplastic chosen from the group of polyamides, polyesters, polyolefins, polycarbonates, acrylonitrile-butadiene-styrene copolymers, vinyl chloride polymers, their recycling products or their mutually compatible blends.

8. Surface-resistant component according to claim 6 or 7, characterized in that the functional or support moulding is a thermopolastic chosen from the group PA6 and PA6.6.

9. Surface-resistant component according to one of the preceding claims, characterized in that the support moulding contains use-dependent additives such as impact modifiers, plasticizers, fillers and pigments.

## Revendications

1. Pièce détachée avec une surface résistante, comprenant une pièce moulée fonctionnelle ou de support et une couche de protection thermoplastique appliquée sur la surface, caractérisée en ce que la couche de protection est constituée par un film réalisé à partir d'un polymère thermoplastique résistant, sélectionné dans le groupe des polyamides et polyesters, la surface de la pièce moulée étant inégale et le film étant introduit dans un moule à injection, puis toute la surface dudit film étant liée ou unie par fusion avec la pièce moulée par l'injection dans le moule de la matière en fonte constituant la pièce moulée.

2. Pièce détachée avec une surface résistante selon la revendication 1, caractérisée en ce que le polymère contient des additifs adaptés à son utilisation, tels que des pigments, des charges, des modificateurs de résilience.

3. Pièce détachée avec une surface résistante selon la revendication 1 ou 2, caractérisée en ce que le polymère contient des stabilisateurs permettant de résister à la chaleur et/ou à la lumière perceptible et/ou aux rayon ultraviolets et/ou à l'hydrolyse et/ou aux produits chimiques.

4. Pièce détachée avec une surface résistante selon l'une quelconque des revendications 1 à 3, caractérisée en ce que le polymère utilisé est choisi dans le groupe des polyamides du type PA4.6, PA6, PA6.6, PA11, PA12, PA12.12, des copolyamides obtenus à partir de diamines aliphatiques, cycloali- phatiques ou aromatiques et d'acides dicarboxyli- ques avec au maximum 20 C-atomes, parmi lesquels on choisit de préférence les acides téréphtaliques et les acides isophtaliques.

5. Pièce détachée avec une surface résistante selon l'une quelconque des revendications précédentes, caractérisée en ce que l'épaisseur de la couche de protection est comprise entre 50 et 1000 /-lm, de préférence entre 100 et 500 µm.

6. Pièce détachée avec une surface résistante selon l'une quelconque des revendications précédentes, caractérisée en ce que la couche de protection et/ou la pièce moulée support contient des modificateurs générateurs de compatibilité, en particulier des composants améliorant l'adhérence réciproque.

7. Pièce détachée avec une surface résistante selon la revendication 6, caractérisée en ce que la pièce moulée fonctionnelle ou de support est réalisée dans une matière thermoplastique, sélectionnée dans le groupe des polyamides, polyesters, polyoléfines, polycarbonates, polymères d'acrylnitrile- styrène-butadiène, polymères de polychlorure de vinyle, dans ces matières recyclées ou dans des liaisons de ces matières compatibles les unes aux autres.

8. Pièce détachée avec une surface résistante selon la revendication 6 ou 7, caractérisée en ce que la pièce moulée fonctionnelle ou de support est réalisée dans une matière thermoplastique, sélectionnée dans le groupe des polyamides du type PA6, PA6.6.

9. Pièce détachée avec une surface résistante selon l'une quelconque des revendications précédentes, caractérisée en ce que le matériau support contient des additifs adaptés à son utilisation, tels que des modificateurs de résilience, des plastifiants, des charges, des pigments.
